(19) **Europäisches Patentamt**
**European Patent Office**
**Office européen des brevets**

(11) **EP 2 902 971 A1**

(12) **EUROPEAN PATENT APPLICATION**

(43) Date of publication:
**05.08.2015 Bulletin 2015/32**

(51) Int Cl.:
*G06T 11/20* (2006.01)   *G06T 19/20* (2011.01)

(21) Application number: **14305146.4**

(22) Date of filing: **03.02.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Thomson Licensing**
**92130 Issy-les-Moulineaux (FR)**

(72) Inventors:
• **Buron, Cyprien**
**35576 CESSON SEVIGNE CEDEX (FR)**

• **Hirtzlin, Patrice**
**35576 CESSON SEVIGNE CEDEX (FR)**
• **Marvie, Jean-Eudes**
**35576 CESSON SEVIGNE CEDEX (FR)**

(74) Representative: **Huchet, Anne**
**Technicolor**
**1, rue Jeanne d'Arc**
**92443 Issy-les-Moulineaux Cedex (FR)**

(54) **METHOD AND DEVICE FOR DEFORMING THE GEOMETRY OF A 3D VIRTUAL SCENE**

(57)     Method and device for deforming mesh element (s) associated with a virtual scene according to a curve surface. The method comprises defining in a procedural way a path (1) comprising a first segment (11) and a second segment (12) adjacent to said first segment (11), each segment being defined with two first points (100, 101, 102) forming the extremities of each segment and with at least a second point (201, 202, 203, 204), the first line segment (11) and the second line segment (12) hav-ing a first point (101) in common, the second point (202) of the first segment (11) closest to the common first point (101) and the second point (203) of the second segment (12) closest to the common first point (101) being defined in such a way that both second points (202, 203) are aligned with the common first point (101); and deforming the at least a mesh element (5) according to the curve surface (53) computed according to the first (101, 102, 103) and second points (201, 202, 203, 204).

Fig 2

## Description

### 1. Technical field

The present disclosure relates to the domain of geometry processing and modelling and more particularly to the deforming of such a geometry associated with a scene represented in one or more synthesis images. The present disclosure is also understood in the context of Computer Generated Image (CGI or 3D-CGI).

### 2. Background art

According to the background art, it is known to represent a 3D scene with a mesh data structure. Various mesh data structure have been developed and optimized for a GPU usage. Data structures such as half-edge data representation, quad-trees, octo-trees, BVH, etc aim at efficiently encoding triangles information. Once generated, positioning and deforming the mesh structure associated with an object of a 3D scene is generally a tedious task for artists, especially when done by hand. Some tools such as 3dsMax ®, Maya® or Unity® propose path deformer tools to help the artist in designing a deforming path to be applied to the object of the 3D scene to reposition or deform. Nevertheless, even with such tools, the designing of the deforming path remains a time consuming task that does not take advantage of the possibility of graphics cards with regard to parallel processing of the tasks.

### 3. Summary

The purpose of the present disclosure is to overcome at least one of these disadvantages of the background art.
More specifically, the purpose of the present disclosure is to generate a curve surface for controlling the deforming of mesh element(s).
The present disclosure relates to a method of deforming at least a mesh element associated with a virtual scene according to a curve surface. The method comprises:

- defining in a procedural way a path comprising a first segment and a second segment adjacent to the first segment, each segment being defined with two first points forming the extremities of each segment and with at least a second point,
  the first segment and the second segment having a first point in common,
  the second point of the first segment closest to the common first point and the second point of the second segment closest to the common first point being defined in such a way that both second points are aligned with the common first point,
- deforming the at least a mesh element according to the curve surface computed according to the first and second points.

According to a particular characteristic, the second point of the first segment closest to the common first point and the second point of the second line segment closest to the common first point correspond to a projection of respectively a third point belonging to the first segment and a third point belonging to the second segment onto a plane orthogonal to a normal of the common first point, the normal of the common first point being chosen in such a way that both second points are aligned with the common first point.
Advantageously, the normal of the common first point belongs to a plane defined by the first points forming the extremities of the first and second segment.
According to a specific characteristic, the third points are generated by sampling the first and second segments.
Advantageously, the curve surface is a cubic Bezier curve.
According to another characteristic, the method further comprises rendering the at least a deformed mesh element.
The present disclosure also relates to a device configured for deforming at least a mesh element associated with a virtual scene according to a curve surface, the device comprising at least one processor configured for:

- defining in a procedural way a path comprising a first segment and a second segment adjacent to the first segment, each segment being defined with two first points forming the extremities of each segment and with at least a second point,
  the first segment and the second segment having a first point in common,
  the second point of the first segment closest to the common first point and the second point of the second line segment closest to the common first point being defined in such a way that both second points are aligned with the common first point,

- deforming the at least a mesh element according to the curve surface computed according to the first and second points.

Advantageously, the at least one processor is further configured for projecting a third point belonging to the first segment and a third point belonging to the second segment onto a plane tangent to a normal of the common first point, the normal of the common first point being chosen in such a way that both second points are aligned with the common first point, in order to obtain respectively the second point of the first segment closest to the common first point and the second point of the second line segment closest to the common first point.

According to a specific characteristic, the normal of the common first point belongs to a plane defined by the first points forming the extremities of the first and second segments.

According to another characteristic, the at least one processor is further configured for sampling the first and second segments to generate the third points.

Advantageously, the curve surface is a cubic Bezier curve.

According to another characteristic, the at least one processor is further configured for rendering the at least a deformed mesh element.

In an advantageous way, the at least one processor is a Graphical Processor Unit (GPU).

The present disclosure also relates to a computer program product comprising instructions of program code for execution by at least one processor to perform the method of deforming at least a mesh element, when the program is executed on a computer.

The present disclosure also relates to a processor readable medium having stored therein instructions for causing a processor to perform at least the steps of the method of deforming at least a mesh element.

### 4. List of figures

The present disclosure will be better understood, and other specific features and advantages will emerge upon reading the following description, the description making reference to the annexed drawings wherein:

- figure 1 shows a path comprising segments, according to a particular embodiment;
- figure 2 shows points used for controlling the segments of the path of figure 1, according to a particular embodiment;
- figures 3 and 4 show a method for determining the points of figure 2, according to a particular embodiment;
- figures 5A to 5D show the deformation of a mesh element according to a curve surface computed according to the points of figure 2, according to a particular embodiment;
- figure 6 diagrammatically shows a device implementing a method of deforming at least a mesh element, according to a particular embodiment;

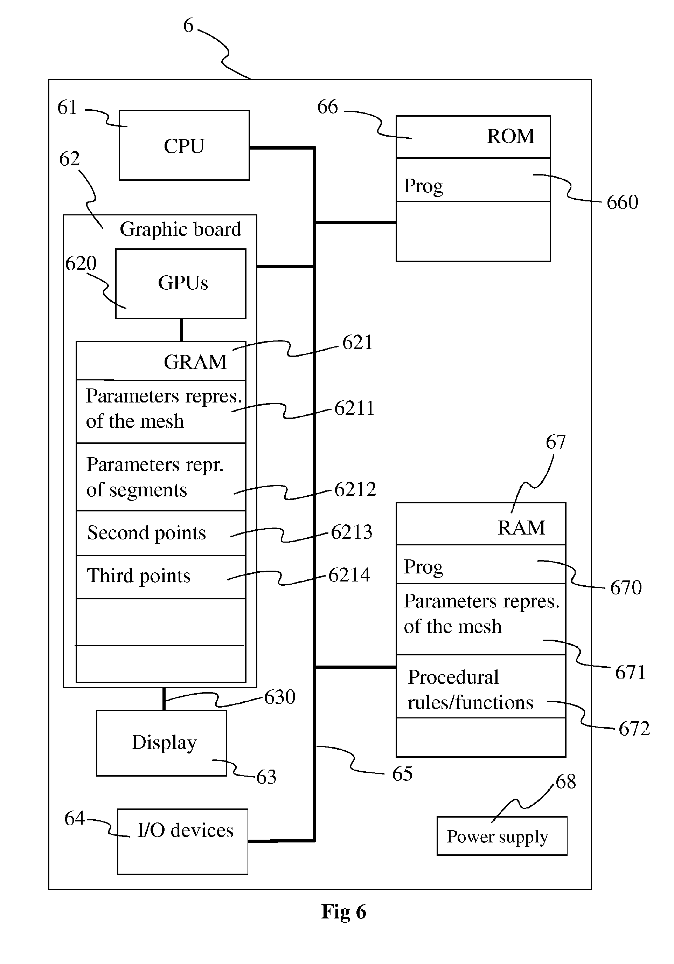

- figure 6 shows a method of deforming at least a mesh element, according to a particular embodiment.

### 5. Detailed description of embodiments

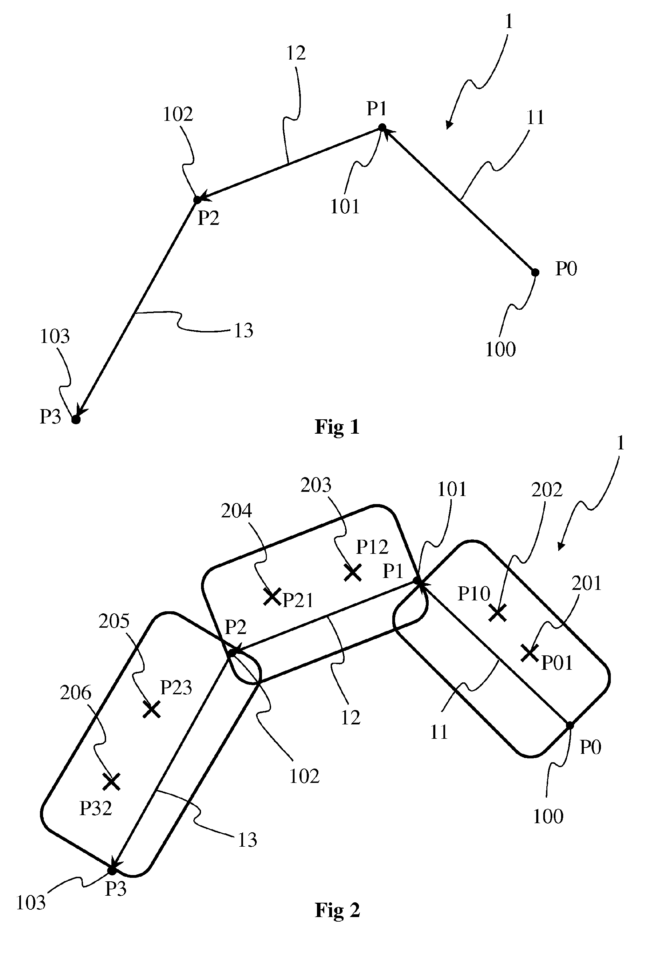

**Figure 1** shows a path (1) that may be used to generate a curve surface used for positioning and/or deforming a geometry associated with a 3D virtual scene, according to a specific and non-limitative embodiment. The geometry to be deformed advantageously corresponds to one or several mesh element (i.e. polygons) of a mesh used for representing the virtual object(s) of the 3D virtual scene. The path 1 according to the non-limitative example of figure 1 comprises three line segments, i.e. a first segment 11, a second segment 12 and a third segment 13. The first segment 11 is defined with two first points P0 100 and P1 101 corresponding to the two extremities (or ending points) of the first segment 11. The second segment 12 is defined with two first points P1 101 and P2 102 corresponding to the two extremities of the second segment 12. The first segment 11 and the second segment 12 are called adjacent segments as they share one of their extremity points, i.e. the first point P1 101 is common to the first segment 11 and to the second segment 12. The third segment 13 is defined with two first points P2 103 and P3 103 corresponding to the two extremities of the third segment 13. The second segment 12 and the third segment 13 are called adjacent segments as they share one of their extremity points, i.e. the first point P2 102 is common to the second segment 12 and to the third segment 13.

The segments of the path 1 are advantageously generated in a procedural way, i.e. either with a function or with a grammar, a grammar including one or more rules with associated parameters. For example, the segments 11 to 13 may be generated with an extrusion rule. A procedural growth may then be used including multiple extrusion and branching structures. Starting from a single source point $P_N$ at a step $N$, an extrusion rule creates:

- a destination point $P_{N+1}$ according to the extrusion vector $\overrightarrow{v^N}$ such that $P_{N+1} = P_N + \overrightarrow{v^N}$
- and the segment $S^N$ joining the source and destination points, i.e. the extremity points $[P_N, P_{N+1}]$ also called first points.

At a next step *N*+1, the new source point is simply the generated point $P_{N+1}$. The branching rule allows duplicating the current source point to call different rules on each one. One can easily simulate branching structures of trees with branching following by different extrusions on the created point. Finally, with this procedural description, multiple extrusions may be performed sequentially and describe the deforming path used later for geometry deformation. According to a variant, twisting normals may also be defined for each first point (i.e. extremity point, i.e. source and destination point).

According to another example, the path 1 may be generated with a procedural function or a procedural rule having as constraint to follow the mesh of an existing object of the 3D virtual scene. It is particularly useful for placing a virtual object on an existing object of the 3D virtual scene (for example for placing ivy on a wall, the ivy following a surface defined with the path that is defined with the procedural function/rule).

Naturally, the number of segments comprised in the path 1 is not limited to three but extends to any number greater than or equal to two segments.

**Figure 2** shows points used for controlling and defining the segments of the path 1, according to a specific and non-limitative embodiment. Two control points are generated for each segment 11, 12 and 13, i.e. control points P01 201 and P10 202 for the first segment 11, control points P12 203 and P21 204 for the second segment 12 and control points P23 205 and P32 206 for the third segment. The control points of each segment are advantageously determined to generate a surface which will be used to guide the deformation of the geometry (i.e. the mesh element(s)). To take benefit of the parallelism of the tasks provides by a graphics card comprising a plurality of GPUs, the surface associated with each segment and the corresponding mesh elements of the object to be deformed are advantageously processed on different threads. To avoid discontinuities at the level of the surface (and thus of the deformed mesh elements) at the joint between two segments, it is important to ensure continuity and smoothness of the surface generated from the path 1. To that aim, first point and second points (corresponding to the control points of the segments) are determined accordingly.

The continuity of the path 1 is ensured by the fact that the segments are adjacent two by two, the first and segments are adjacent to each other, meaning that they share a common extremity point P1 101 and the second and third segment are adjacent to each other, meaning that they share a common extremity point P2 102. Such continuity is called G° continuity. As long as segments that follow each other in the path share a common first point, G° continuity is obtained. When generating the path with the chosen procedural function/rule, a first constraint associated with the procedural function/rule is that destination point of a segment N is the same as the source point of the following segment N+1, each segment being extruded form the source point to end at the destination point. For example, the source point of the first segment 11 is P0 100, the destination point of the first segment 11 is P1 101 and P1 101 is also the source point of the second segment 12. G° continuity is thus provided for the path 1 comprising the first segment 11 and the second segment 12.

Smoothness of the path 1 (and thus smoothness of the curve surface generated from the path 1) is obtained by choosing the second points associated with adjacent segments in such a way that the second point of each one of the adjacent segment closest to the first point common to the two adjacent segments are chosen in such a way that the two second points and the common first points are aligned (i.e. collinear). Such smoothness is also called G$^1$ continuity. When taking the example of figure 2, G$^1$ continuity would be obtained for the first segment 11 and the second segment 12 when the second point P10 202 associated with the first segment 11, the second point P12 203 associated with the second segment 12 and the first point P1 101 common to the first segment 11 and the second segment 12 are aligned. Indeed, the two second points associated with the first segment 11 are P01 201 and P10 202 and, among these two second points, the second point closest to the common first point P1 101 (in term of distance) is the second point P10 202 and for the second segment 12, it is the second point P12 203 that is the closest to the common first point P1 101 when compared with the other second point P21 204 associated with the second segment 12.

Naturally, the number of second points associated with each segment of the path is not limited to 2 but extends to any integer greater than or equal to 1. For example, 2 second points may be computed for each segment when the curve surface used for deforming the geometry element is a cubic Bezier curve. Indeed, 4 points are necessary to define a portion of a cubic Bezier curve for each segment, i.e. two first points (the source and destination points of the segment) and two second points. According to another example, only 1 second point may be computed for each segment when the curve surface used for deforming the geometry element is a quadratic Bezier curve. Indeed, 3 points are necessary to define a portion of a quadratic Bezier curve for each segment, i.e. two first points (the source and destination points of the segment) and one second point. It is to be noted that a quadratic Bezier curve may be chosen for paths comprising only two segments, whereas a cubic Bezier curve may be used for any number of segments for the path.

To allow the synthesis of smooth geometries all along the extruded path, the use of cubic Bezier curves is made according to a non-limitative embodiment because cubic Bezier curves are simple to compute and they have the property to interpolate the first points corresponding to the source and destination control points. However, to maximize the parallelism performances offered by graphics cards, it is advantageous to handle the geometry synthesis on a segment-based approach. To that aim, the generated segments are defined with two first points for each segment, namely the source and destination control points $P_N$ and $P_{N+1}$. In addition two other control points, called second points, are automatically computed so that each segment became similar to an independent cubic Bezier curve (with four control points) to be processed independently in the pipeline of the graphics card. $G^1$ continuity with the neighbor segments is preserved while computing the two second points. Mathematically, $G^1$ continuity is preserved between two cubic Bezier curves A (composed of $PA_0$, $PA_1$, $PA_2$, $PA_3$) and B ($PB_0$, $PB_1$, $PB_2$, $PB_3$) only if:

- the first point corresponding to the destination control point $PA_3$ of A and the first point corresponding to the source control point $PB_0$ are identical (G° continuity); and
- the 1-ring second control points of the common first point to the two segments $PA_3 \equiv PB_0$, i.e. $PA_2$ and $PB_1$, are aligned with the first common point $PA_3 \equiv PB_0$.

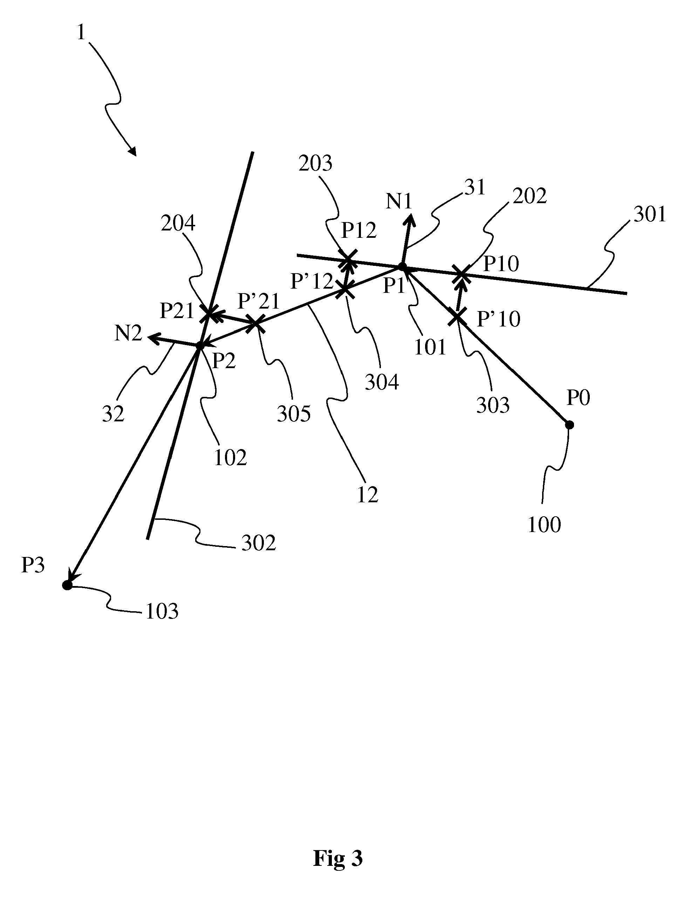

As each segment independently generates its second control points, additional information to ensure this alignment requirement is advantageously necessary. The second (control) points are advantageously generated according to the normal of the first points, i.e. the source and destination points, as illustrated on **Figure 3.** On figure 3, the normal N1 31 is generated at the first point P1 101 common to the first segment 11 and to the second segment 12. The normal N2 32 is generated at the first point P2 102 common to the second segment 12 and to the third segment 13. Plane 301 corresponds to the plane tangent to the normal N1 31 and plane 302 corresponds to the plane tangent to the normal N2 32. P'10 303 belongs to the first segment 11 and P10 202 (which is the second point associated with the first segment that is the closest to the first common point P1 101 among the plurality of second points associated with the first segment 11) corresponds to the projection point of P'10 303 according to N1. P'12 304 belongs to the second segment 12 and P12 203 (which is the second point associated with the second segment 12 that is the closest to the first common point P1 101 among the plurality of second points associated with the second segment 12) corresponds to the projection point of P'12 304 according to N1. In a same way, P'21 305 belongs to the second segment 12 and P21 204 (which is the second point associated with the second segment that is the closest to the first common point P2 102 among the plurality of second points associated with the second segment 12) corresponds to the projection point of P'21 305 according to N2. Points P'10 303, P'12 304 and P'21 305 are also called third points. As to ensure the $G^1$ continuity, the normal N1 31, which is different from twisting normal, is chosen in such a way that both second points P10 202 and P12 203 are aligned with the common first point P1 101. The same rule applies to N2 32.

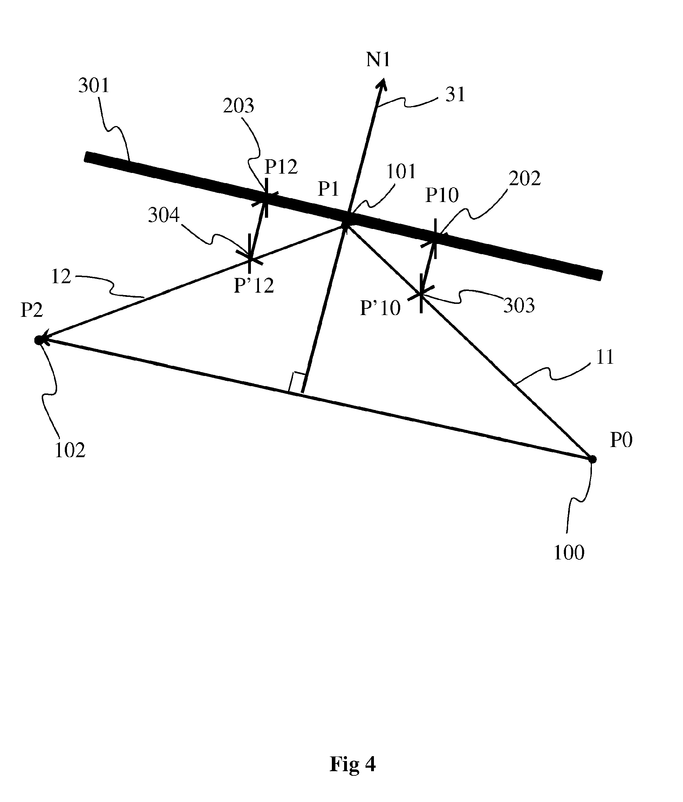

One way to ensure this latter condition is that the normal of one ending points $P_N$ belongs to the plane defined by the three control points $P_{N1}$, $P_N$ and $P_{N+1}$, as illustrated on **Figure 4.** Figure 4 illustrates the part of the path 1 comprising the first segment 11 and the second segment 12. Elements of figure 4 which are identical to elements of figures 1 to 3 keep the same references over the different figures. According to the exemplar embodiment of figure 4, the normal N1 31 at the first point 101 common to the first segment 11 and to the second segment 12 belongs to the plane defined by the points P0 100, P1 101 and P2 102 (which form a triangle), which correspond to the extremities of the first and second segments 11 and 12. Thus, the projection of any point belonging to the first segment 11 and the projection of any point belonging to the second segment 12 onto the plane tangent to the normal N1 31 according to N1 31 are aligned with extremity point P1 101, which corresponds to the first point common to the first and second segments. Then, P10 202, P1 101 and P12 203 are aligned/collinear, which enables to ensure the G1 continuity between a portion of the cubic Bezier curve defined with the control points (first and second points) associated with the first segment 11 and a portion of the cubic Bezier curve defined with the control points (first and second points) associated with the second segment 12.

The evaluation of the description used for generating the path (and the associated curve surface), for example en extrusion, is on a depth-first stack-based approach. Basically, when evaluating the procedural rules/functions, the successor corresponding to the next point is chosen rather than the one corresponding to the generated segment. For a step N, a segment $S_N$ depends on the first (control) points $P_N$ and $P_{N+1}$. The segment also needs the computed normals $N_N$ and $N_{N+1}$. However, while $N_N$ depends on know first (control) points ($P_{N-1}$, $P_N$ and $P_{N+1}$), $N_{N+1}$ requires additional first (control) point $P_{N+2}$ which is still uncomputed. Using this strategy, all the points of each extruded branch are evaluated before evaluating the generated segments and corresponding normals. By storing all the points during the first evaluation, the procedure evaluation simply accesses the stored values at run-time. While the previous normal ensures the $G^1$ continuity when computing the second (control) points, it is also necessary to specify the normal and tangent values for each extremity point for the geometry synthesis. If known, twisting normals may be used as normal extremity points. Otherwise the computed projection normal is used. The tangent values are automatically computed as the cross product between the binormal ($P_{N+1}$ - $P_{N-1}$) and the normal extremity point.

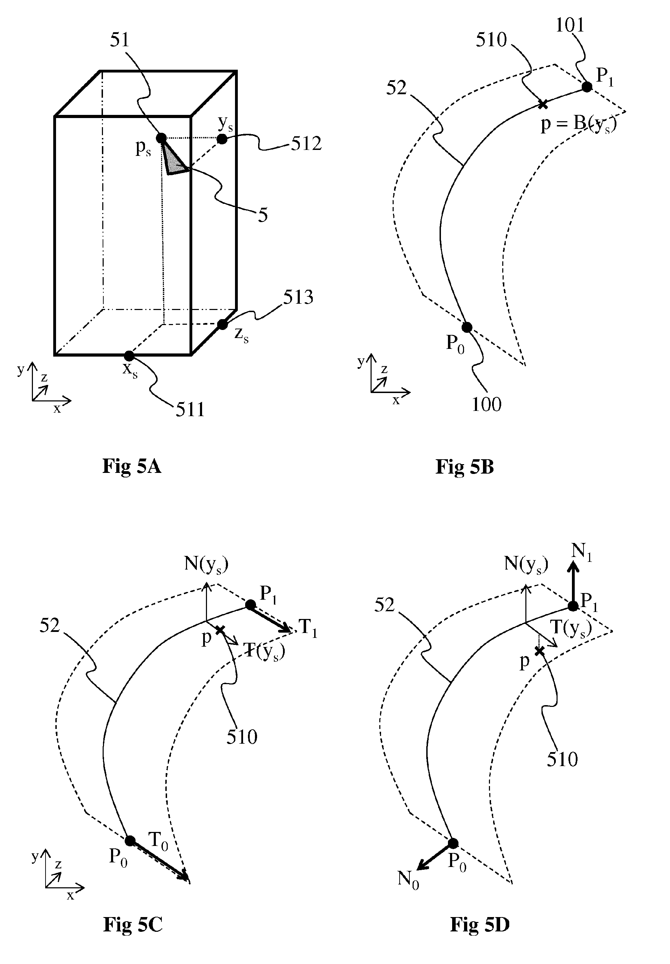

**Figures 5A to 5D** show the geometry synthesis (corresponding to the repositioning and/or the deforming of one or more mesh elements) according to a curve surface computed with the first and second control points associated with the first segment 11, according to a specific and non-limitative embodiment.

Once the procedures are evaluated, geometry synthesis part is performed in parallel. Each generated segment knows its first (control) points and projection normals so the additional second (control) point(s) may be computed independently using the defined projection. An incremental process is then used to deform the mesh element of the original object, for example according to a Bezier curve. First, the Bezier curve is computed according to the control points of each segment, i.e. the first points $P_N$ and $P_{N+1}$ and second points $P_{N,N+1}$ and $P_{N+1,N}$ ($P_N$ and $P_{N+1}$ correspond for example to the first point P0 and P1 for the first segment and $P_{N,N+1}$ and $P_{N+1,N}$ correspond for example to the second points P01 and P10 for the first segment), as:

$$B(t) = (1-t)^3 P_N + 3(1-t)^2 t P_{N,N+1} + 3(1-t)t^2 P_{N+1,N} + t^3 P_{N+1}$$

In case twisting normals are specified at first (control) points, the normals No, $N_1$ (respectively the tangents To, $T_1$) all along the Bezier curve have to be interpolated as illustrated on figures 5C and 5D. By defining a normal point at mid-edge, a quadratic normal interpolation captures shape variations (e.g. inflexions), which is not possible with linear interpolation. This mid-edge normal point $N_{N,N+1}$ is defined as the average of the normals at the first points (extremities of a segment) reflected across the plane perpendicular to the segment:

$$N_{N,N+1} = \frac{h_{N,N+1}}{\|h_{N,N+1}\|}$$
$$h_{N,N+1} = N_N + N_{N+1} - v_{N,N+1}(P_{N+1} - P_N)$$
$$v_{N,N+1} = 2\frac{(P_{N+1} - P_N).(N_N + N_{N+1})}{(P_{N+1} - P_N).(P_{N+1} - P_N)}$$

$N_N$ being the normal at the first point $P_N$,
$N_{N+1}$ being the normal at the first point $P_{N+1}$,
$N_{N,N+1}$ corresponding to an second normal at a point belonging to the segment between the two first points forming the extremities of the segment, for example at the middle of the segment.
The final quadratic equation for interpolating normal extremity points $P_N$ and $P_{N+1}$ is:

$$N(t) = (1-t)^2 N_N + 2(1-t)t N_{N,N+1} + t^2 N_{N+1}$$

Geometry synthesis onto each generated quadrilateral is then performed in parallel using interpolated Bezier information: position, normal and tangent. The bounding box of the object is considered to transform all the vertices 51 of the mesh element(s) 5. Let $p_s$ 51 ($x_s$, $y_s$, $z_s$) be a vertex of the terminal shape, where $x_s$ 511, $y_s$ 512, $z_s$ 513 are normalized (i.e. relatively to the bounding box of the terminal shape). Computation of p(x, y, z), the interpolation of $p_s$ according to the Bezier curve, is performed incrementally. First, p 510 is positioned according to the Bezier curve 53 interpolation using its height value $y_s$ (Figure 5C) as:

$$p = p + T(y_s)(T_0(1 - y_s) + T_1 y_s)(x_s - 0.5)$$

where $T_0$ and $T_1$ are respectively the length of the tangent at extremity points $P_0$ 100 and $P_1$ 101. Finally, p 510 is translated according to the interpolated normal at $y_s$ using its depth value $z_s$ (Figure 5D):

$$p = p + N(y_s)(N_0(1 - y_s) + N_1 y_s)(z_s - 0.5)$$

where $N_0$ and $N_1$ are the length of the normal at extremity points P0 and P1. On figure 5A, vertex $p_s$ is normalized according to the bounding box. On figure 5B, cubic Bezier interpolation at $y_s$ position p onto the Bezier curve 52 associated with the first segment, i.e. generated from the first and second points of the first segment: p = B($y_s$). On figure 5C, p 510 is translated according to the interpolated tangent T($y_s$) and its width $x_s$: $p = p + T(y_s)(T_0(1 - y_s) + T_1 y_s)(x_s - 0.5)$. On

figure 5D, p 510 is translated according to the interpolated normal $N(y_s)$ and its depth $z_s$: $p = p + N(y_s)(N_0(1 - y_s) + N_1 y_s)(z_s - 0.5)$.

In the end, the mesh element 5 is smoothly interpolated according to the Bezier curve. Considering unique normal and tangent information for adjacent quadrilateral generated with the marching rule, repetitive terminal mesh models are seamlessly generated at terminal evaluation.

**Figure 6** diagrammatically shows a hardware embodiment of a device 6 configured for synthesizing mesh element(s) associated with a virtual scene according to a curve surface. The device 6 is also configured for the creation of display signals of one or several synthesis images representative of the synthesized mesh elements of the 3D virtual scene .

The device 6 corresponds for example to a personal computer (PC), a laptop, a tablet, a Smartphone or a games console.

The device 6 comprises the following elements, connected to each other by a bus 65 of addresses and data that also transports a clock signal:

- a microprocessor 61 (or CPU),
- a graphics card 62 comprising:

    • several Graphical Processor Units (or GPUs) 620,
    • a Graphical Random Access Memory (GRAM) 621,

- a non-volatile memory of ROM (Read Only Memory) type 66,
- a Random Access Memory or RAM 67,
- one or several I/O (Input/Output) devices 64 such as for example a keyboard, a mouse, a webcam, and
- a power source 68.

The device 6 also comprises a display device 63 of display screen type directly connected to the graphics card 62 to display synthesized images calculated and composed in the graphics card, for example live. The use of a dedicated bus to connect the display device 63 to the graphics card 62 offers the advantage of having much greater data transmission bitrates and thus reducing the latency time for the displaying of images composed by the graphics card. According to a variant, a display device is external to the device 6 and is connected to the device 6 by a cable or wirelessly for transmitting the display signals. The device 6, for example the graphics card 62, comprises an interface for transmission or connection (not shown in figure 6) adapted to transmit a display signal to an external display means such as for example an LCD or plasma screen or a video-projector.

It is noted that the word "register" used in the description of memories 621, 66 and 657 designates in each of the memories mentioned, both a memory zone of low capacity (some binary data) as well as a memory zone of large capacity (enabling a whole program to be stored or all or part of the data representative of data calculated or to be displayed).

When switched-on, the microprocessor 61 loads and executes the instructions of the program contained in the RAM 67.

The random access memory 67 notably comprises:

- in a register 670, the operating program of the microprocessor 61 responsible for switching on the device 6,
- parameters 671 representative of the mesh used for modelling/representing the virtual object(s) of the 3D virtual scene, e.g. coordinates of the vertices of the mesh elements in the world space;
- procedural rules/functions 672 and associated grammar and/or parameters for generating the segments of the path.

The algorithms implementing the steps of the method specific to the present disclosure and described hereafter are stored in the memory GRAM 621 of the graphics card 62 associated with the device 6 implementing these steps. When switched on and once the parameters 671 representative of the environment are loaded into the RAM 67, the graphic processors 620 of the graphics card 62 load these parameters into the GRAM 621 and execute the instructions of these algorithms in the form of microprograms of "shader" type using HLSL (High Level Shader Language) language or GLSL (OpenGL Shading Language) for example.

The random access memory GRAM 621 notably comprises:

- in a register 6211, the parameters representative of the mesh,
- in a register 6212, the parameters representative of the segments comprised in the path, for example the coordinates of the first points in the world space (i.e. space of the 3D virtual scene);
- in a register 6213, the coordinates (in the world space) of the second points used for controlling the segments;
- in a register 6214, the coordinates (in the world space) of the third points used for generating the second points.

According to a variant, the parameters of the segments, the coordinates of the second and third points are stored in the RAM 67 and processed by the microprocessor 61.

According to another variant, a part of the RAM 67 is assigned by the CPU 61 for storage of the segments parameters and coordinates of the points if the memory storage space available in GRAM 621 is insufficient. This variant however causes greater latency time in the composition of an image comprising a representation of the environment composed from microprograms contained in the GPUs as the data must be transmitted from the graphics card to the random access memory 67 passing by the bus 65 for which the transmission capacities are generally inferior to those available in the graphics card for transmission of data from the GPUs to the GRAM and vice-versa.

According to another variant, the power supply 68 is external to the device 6.

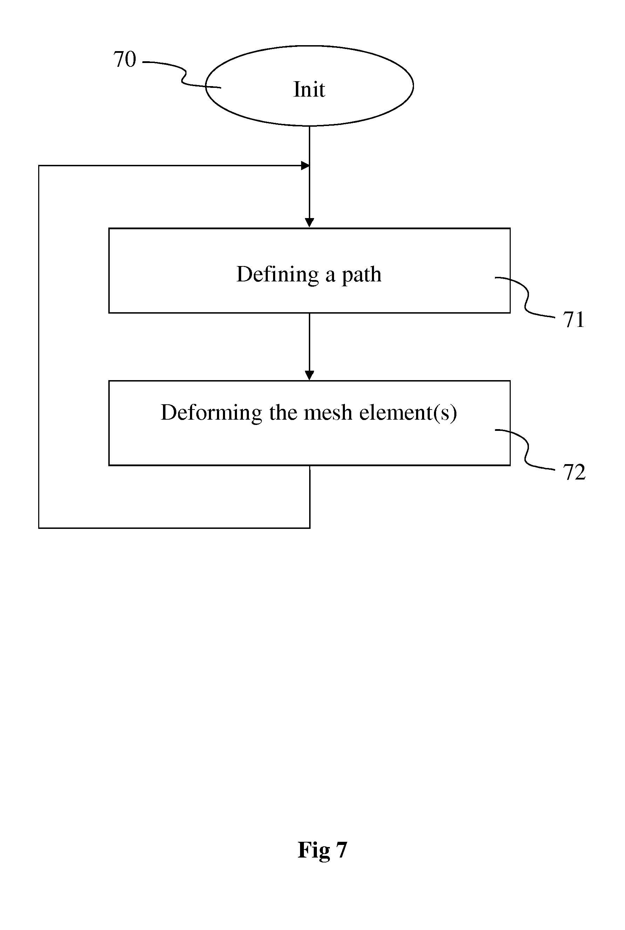

**Figure 7** shows a method of deforming mesh element(s) of a 3D virtual scene implemented for example in a device 6, according to a non-restrictive advantageous embodiment.

During an initialisation step 70, the different parameters of the device 6 are updated. In particular, the parameters representative of the first and second points as well as the parameters associated with the procedural rule(s)/function(s) are initialised in any way.

Then during a step 71, one or several procedural rules or functions is/are called to generate a path comprising a first segment and a segment. The first and second segments are each defined with two first points, one at each extremity of each segment, one of these first points being common to the first segment and to the second segment, this common point being called common first point: the first segment and the second segment being thus adjacent. One or several second points are furthermore defined for each segment. The second points are defined in such a way that the second point associated with the first segment being the closest one to the first common point and the second point associated with the second segment being the closest one to the first segment are both aligned with the common first point in the world space, i.e. in the space of the 3D virtual scene. The second points advantageously do not belong to the segments and are called control points (with the first points) as they are used to control the segments forming the path and to generate a curve surface associated with the path. The curve surface is advantageously used for synthesizing (i.e. deforming or repositioning geometries of the 3D virtual scene, i.e. one or more mesh elements of a mesh representing the surface(s) of virtual object(s) of the 3D virtual scene, a mesh element corresponding to a polygon, for example a triangle).

The second points associated with each first and second segment advantageously correspond to the projection of third points belonging to respectively the first and second segment onto planes orthogonal to normals at the first points. For example, for the first segment, the second point closest to the common first point is the projection of a third point belonging to the first segment onto the plane orthogonal to the normal of the common first point and, for the second segment, the second point closest to the common first point is the projection of a third point belonging to the second segment onto the same plane orthogonal to the normal at the common first point. This plane orthogonal to the normal may also be called tangent plane at the common first point. The normal at the common first point used for defining the tangent plane at the common first point is advantageously chosen in such a way that the second points being the closest to the common first point are aligned with the common first point. Third points belonging to a segment are advantageously comprised between the first points of the segment. The third points are advantageously generating by sampling the first segment and the second segment. The sampling is either uniform (i.e. the third points of a segment divide the segment as to form sample of the same length) or the third point(s) of a segment is(are) generated arbitrary, i.e. randomly.

According to a variant, the normal at the common first point is chosen as belonging to a plane defined by the three first points forming the extremities (endpoints) of the first segment and the second segment when the first and second segments are not aligned, i.e. when the three first points form a triangle. The normal may be chosen arbitrary as long as it belongs to the plane defined by the three first points.

Then during a step 72, the mesh element(s) is (are) deformed (repositioned) according to the curve surface defined with the control points of the first and second segments, i.e. the first and second points. The generation of the curve surface may be done by part, i.e. in a parallel way for each segment. As the first and second segment are adjacent, G° continuity is guaranteed and as the second points closest to the common first points are aligned with the common first point, $G^1$ continuity is also guaranteed. The curve surface may thus be generated by parts without losing $G^0$ and $G^1$ continuity. During step 72, the original coordinates of each of the vertices of the mesh element(s) expressed in the world space are translated in order to stick the curve surface. Such a process enables to deform/reposition a mesh of an existing object of the 3D virtual scene as to follow a curve surface easily defined via the procedurally-defined path comprising the first and second segments. The curve surface advantageously correspond to a Bezier surface, for example a quadratic Bezier surface (defined with 3 control points for each of the first and second segments), a cubic Bezier surface (defined with 4 control points for each segment), a quartic Bezier surface (defined with 5 control points for each segment), etc. The deforming step is advantageously parallelized by assigning the computation related to the deformation of the mesh element associated to different parts of the curve surface associated with each first and second segments, i.e. computations associated to the curve surface associated with the first segment are assigned to one or more GPUs while the computations associated to the part of the curve surface associated with the second segment are assigned to one or more other GPUs.

According to a variant, the curve surface is of the type of Lagrange Curve or B-splines curve.

Then during an optional step, the deformed mesh of the 3D virtual scene is rendered as to be displayed on a display screen, i.e. a new synthesis image is displayed with the deformed mesh, i.e. by taking into account the recomputed coordinates of the mesh vertices that have been deformed according to the curve surface. Computation may be done in parallel for each part of the mesh deformed according to each part of the curve surface as for the deforming step 72.

Naturally, steps 71 to 72 may be reiterated for different objects of the virtual scene or for different virtual scenes.

Naturally, the present disclosure is not limited to the embodiments previously described.

In particular, the present disclosure is not limited to a method of deforming mesh element(s) of a scene but also extends to any device implementing this method and notably any devices comprising at least one GPU. The implementation of calculations necessary to the deformation of the mesh element(s) is not limited either to an implementation in shader type microprograms but also extends to an implementation in any program type, for example programs that can be executed by a CPU type microprocessor. The use of the methods of the present disclosure is not limited to a live utilisation but also extends to any other utilisation, for example for processing known as postproduction processing in a recording studio for the display of synthesis images for example.

The present disclosure also relates to a method (and a device configured) for synthesizing mesh elements or for rendering a synthesis image.

The implementations described herein may be implemented in, for example, a method or a process, an apparatus, a software program, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, Smartphones, tablets, computers, mobile phones, portable/personal digital assistants ("PDAs"), and other devices that facilitate communication of information between end-users.

Implementations of the various processes and features described herein may be embodied in a variety of different equipment or applications, particularly, for example, equipment or applications associated with data encoding, data decoding, view generation, texture processing, and other processing of images and related texture information and/or depth information. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

**Claims**

1. Method of deforming at least a mesh element (5) associated with a virtual scene according to a curve surface (53), **characterized in that** the method comprises:

   - defining (71) in a procedural way a path (1) comprising a first segment (11) and a second segment (12) adjacent to said first segment (11), each line segment being defined with two first points (100, 101, 102) forming the extremities of each segment and with at least a second point (201, 202, 203, 204),
   the first line segment (11) and the second segment (12) having a first point (101) in common,
   the second point (202) of the first segment (11) closest to the common first point (101) and the second point (203) of the second segment (12) closest to the common first point (101) being defined in such a way that both second points (202, 203) are aligned with the common first point (101),
   - deforming (72) said at least a mesh element (5) according to the curve surface (53) computed according to the first (101, 102, 103) and second points (201, 202, 203, 204).

2. Method according to claim 1, wherein the second point (202) of the first segment (11) closest to the common first point (101) and the second point (203) of the second segment (12) closest to the common first point (101) correspond to a projection of respectively a third point (303) belonging to the first segment (11) and a third point (304) belonging to the second segment (12) onto a plane (301) orthogonal to a normal (31) of said common first point (101), the normal (31) of said common first point being chosen in such a way that both second points (202, 203) are aligned with the common first point (101).

3. Method according to claim 2, wherein said normal (31) at said common first point (101) belongs to a plane defined by the first points (100, 101, 102) forming the extremities of said first (11) and second (12) segments.

4. Method according to any one of claims 2 to 3, wherein said third points (303, 304) are generated by sampling said first (11) and second (12) segments.

5. Method according to any one of claims 1 to 4, wherein said curve surface (53) is a cubic Bezier curve.

6. Method according to one of claims 1 to 5, wherein the method further comprises rendering the at least a deformed mesh element.

7. Device (6) configured for deforming at least a mesh element associated with a virtual scene according to a curve surface, **characterized in that** the device comprises at least one processor (620) configured for:

   - defining in a procedural way a path comprising a first line segment and a second line segment adjacent to said first line segment, each line segment being defined with two first points forming the extremities of each segment and with at least a second point,
   the first line segment and the second segment having a first point in common,
   the second point of the first segment closest to the common first point and the second point of the second line segment closest to the common first point being defined in such a way that both second points are aligned with the common first point,
   - deforming said at least a mesh element according to the curve surface computed according to the first and second points.

8. Device according to claim 7, wherein the at least one processor (620) is further configured for projecting a third point belonging to the first segment and a third point belonging to the second segment onto a plane tangent to a normal of said common first point, the normal of said common first point being chosen in such a way that both second points are aligned with the common first point, in order to obtain respectively the second point of the first segment closest to the common first point and the second point of the second line segment closest to the common first point.

9. Device according to claim 8, wherein said normal of said common first point belongs to a plane defined by the first points forming the extremities of said first and second segment.

**10.** Device according to any one of claims 8 to 9, wherein the at least one processor (620) is further configured for sampling said first and second segments to generate said third points.

**11.** Device according to any one of claims 7 to 10, wherein said curve surface is a cubic Bezier curve.

**12.** Device according to any one of claims 7 to 11, wherein the at least one processor (620) is further configured for rendering the at least a deformed mesh element.

**13.** Device according to any one of claims 7 to 12, wherein the at least one processor (620) is a Graphical Processor Unit (GPU).

**14.** Computer program product, **characterized in that** it comprises instructions of program code for executing the method according to any one of claims 1 to 6, when said program is executed on a computer.

**15.** A processor readable medium having stored therein instructions for causing a processor to perform at least the method according to any one of claims 1 to 6.

Fig 1

Fig 2

**Fig 3**

**Fig 4**

**Fig 5A**

**Fig 5B**

**Fig 5C**

**Fig 5D**

**Fig 6**

70 — Init

Defining a path — 71

Deforming the mesh element(s) — 72

**Fig 7**

Europäisches
Patentamt

European
Patent Office

Office européen
des brevets

**EUROPEAN SEARCH REPORT**

Application Number

EP 14 30 5146

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YU-KUANG CHANG ET AL: "A generalized de Casteljau approach to 3D free-form deformation", PROCEEDINGS OF THE 21ST ANNUAL CONFERENCE ON COMPUTER GRAPHICS AND INTERACTIVE TECHNIQUES , SIGGRAPH '94, 1994, pages 257-260, XP055138787, New York, New York, USA DOI: 10.1145/192161.192220 ISBN: 978-0-89-791667-7 * the whole document * | 1-15 | INV. G06T11/20 G06T19/20 |
| A | Gerald E Farin: "Curves and surfaces for computer aided geometric design : a practical guide , Chapter 7 (Spline Curves in Bézier Form)" In: "Curves and surfaces for computer aided geometric design : a practical guide", 1993, Academic Press, XP055138834, ISBN: 0-12-249052-5 pages 101-120, * page 101 - page 105 * | 1,7,14, 15 | |
| A | VON FUNCK W ET AL: "Explicit Control of Vector Field Based Shape Deformations", COMPUTER GRAPHICS AND APPLICATIONS, 2007. PG '07. 15TH PACIFIC CONFERENCE ON, IEEE, PISCATAWAY, NJ, USA, 29 October 2007 (2007-10-29), pages 291-300, XP031221769, ISBN: 978-0-7695-3009-3 * the whole document * | 1-15 | TECHNICAL FIELDS SEARCHED (IPC) G06T |
| A | US 2010/214312 A1 (WEBER OFIR [IL] ET AL) 26 August 2010 (2010-08-26) * paragraphs [0053] - [0062], [0107], [0109] * | 1-15 | |

The present search report has been drawn up for all claims

| Place of search | Date of completion of the search | Examiner |
|---|---|---|
| Berlin | 9 September 2014 | Reise, Frank |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 14 30 5146

This annex lists the patent family members relating to the patent documents cited in the above-mentioned European search report.
The members are as contained in the European Patent Office EDP file on
The European Patent Office is in no way liable for these particulars which are merely given for the purpose of information.

09-09-2014

| Patent document cited in search report | Publication date | Patent family member(s) | Publication date |
|---|---|---|---|
| US 2010214312 A1 | 26-08-2010 | NONE | |

For more details about this annex : see Official Journal of the European Patent Office, No. 12/82